# EUROPEAN PATENT SPECIFICATION

(11) **EP 2 252 437 B1**
(45) Date of publication and mention of the grant of the patent: **24.08.2011**
(21) Application number: 08707994.3
(22) Date of filing: 18.01.2008
(51) Int. Cl.: B25J 17/02

(54) **TWO DEGREE-OF-FREEDOM PARALLEL MANIPULATOR**
PARALLELER MANIPULATOR MIT ZWEI FREIHEITSGRADEN
MANIPULATEUR PARALLÈLE À DEUX DEGRÉS DE LIBERTÉ

(43) Date of publication of application: 24.11.2010
(73) Proprietor: FUNDACION FATRONIK, 20009 San Sebastian (ES); Centre National de la Recherche Scientifique (CNRS), 75794 Paris Cedex 10 (FR)
(72) Inventor: PIERROT, François, F-75794 Paris Cedex 16 (FR); KRUT, Sebastien, F-75794 Paris Cedex 16 (FR); COMPANY, Olivier, F-75794 Paris Cedex 16 (FR); NABAT, Vincent, E-20009 San Sebastian (ES); BARADAT, Cedric, E-20009 San Sebastian (ES); SAENZ FERNANDEZ, Agustín, Javier, E-20009 San Sebastian (ES)
(74) Representative: Carpintero Lopez, Francisco
(86) International application number: PCT/EP2008/050563
(87) International publication number: WO 2009/089916

(56) References cited:
- EP-A- 1 870 214
- WO-A-03/055653
- DE-A1-102005 014 863
- US-B1- 6 418 811

## Description

### OBJECT OF THE INVENTION

The present invention relates to a two degree-of-freedom parallel manipulator, used mainly in manipulation of objects, also named "pick-and-place". Said degrees of freedom refer to two translations according to a vertical and horizontal axis.

### BACKGROUND OF THE INVENTION

The robots with two degrees of freedom used for pick and place tasks are designed to have two translations. Mainly depending on the application, the moving platform of the robot maintains the orientation or not.

The two degree-of-freedom robots, that make two translations and maintain the orientation of the platform constant, are much widely used in the industry. The restriction that allows maintaining the orientation of the platform constant is realized by means of a planar parallelogram that only allows a circular translation between solids. This composed articulation is known as Π joint [Hervé J.M., "Analyse structurelle des mécanismes par groupes de deplacements", Mechanism and Machine Theory, Vol. 13, pp. 437-450, 1978]. In this way, the mechanism proposed by Brogårdh [Brogårdh T., Patent N° US 6,301,988 B1, "Device for relative movement of two elements", 2001] and shown in figure 1, a Π link situated between the prismatic drives and the end-effector guarantees the orientation of this end-effector.

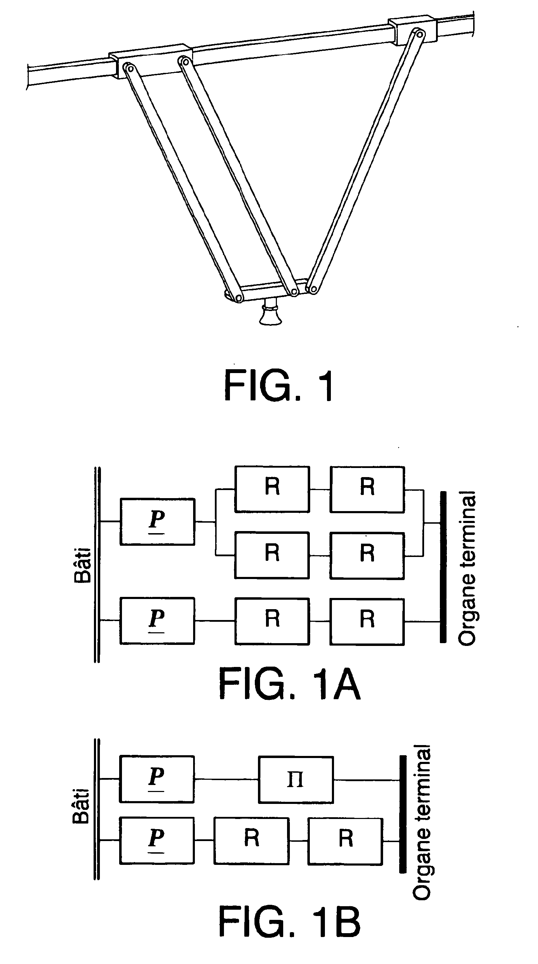

Figure 1A and 1B show the two different possible representations for the Π linkage. Figure 1A shows the complete representation, four cylindrical joints in closed chains. Figure 1B shows the simplified representation of the linkage.

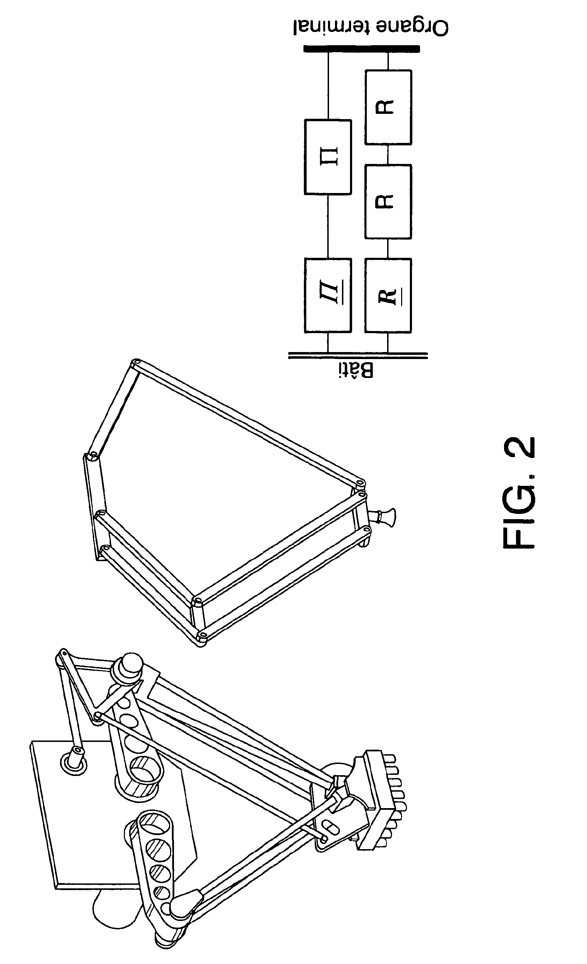

These mechanisms can also be created using rotational drives instead of prismatic drives, as shown in the figure 2.

The joint representation in figure 2 shows that the motion control of these architectures is made by means of the Π linkage, joined to one of the rotational drives. However, it is possible to change the position of the planar parallelogram, as shown in the mechanism of figure 2, in order to increase the working volume and to avoid the singular positions of the Π joint.

Other possibility for the mechanism represented in figure 2 is to be designed using the "lambda" disposition. In this case, a particular position of the articulation that links the two solids is defined. Indeed, the joint is not placed at the extremity the part, but along the leg. A well known example using this configuration is the Stewart platform [Stewart D., "A platform with 6 degrees of freedom", in Proc. Inst Mech. Ing., pp. 371-386, vol. 180, (part 1,15), 1965].

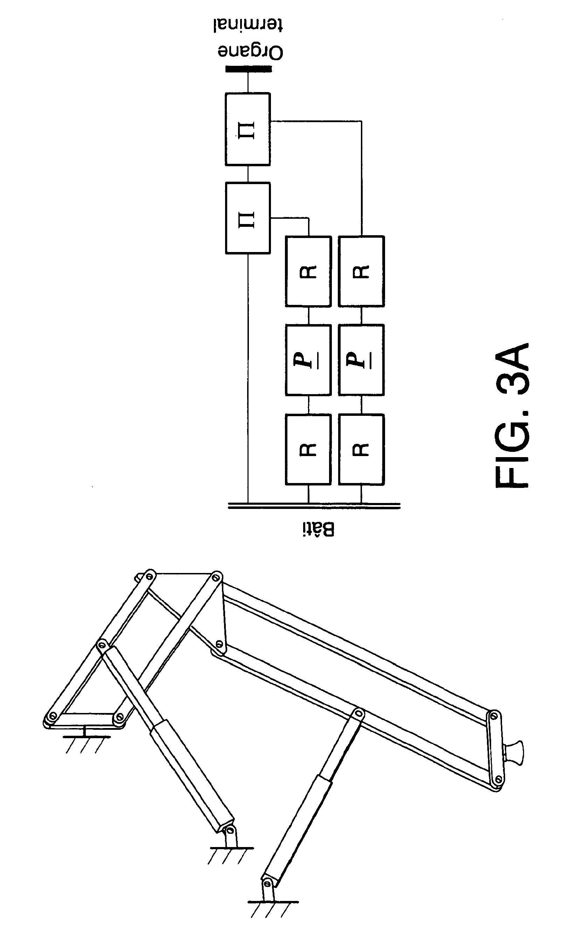

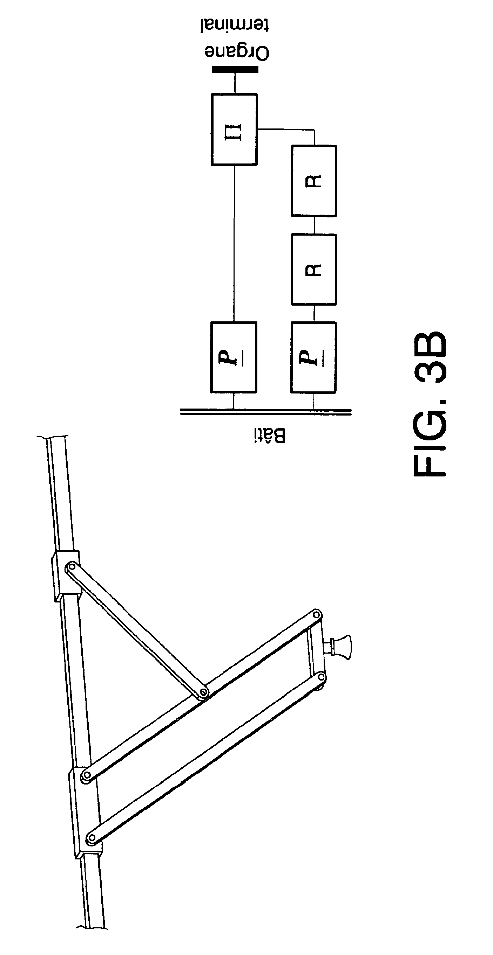

The advantage of the "lambda" configuration is to modify the kind of the drive, figure 3A, or to reduce the size of the platform, figure 3B.

This kind of architecture is more adapted to the manipulation of heavy loads than high speed motions.

EP-A-1870214 discloses a four decree-of-freedom parallel manipulator comprising a frame, a platform with an end effector, four frame arms actuated independently one from the other, each linked to a platform arm, the arms being contained in two orthogonal planes.

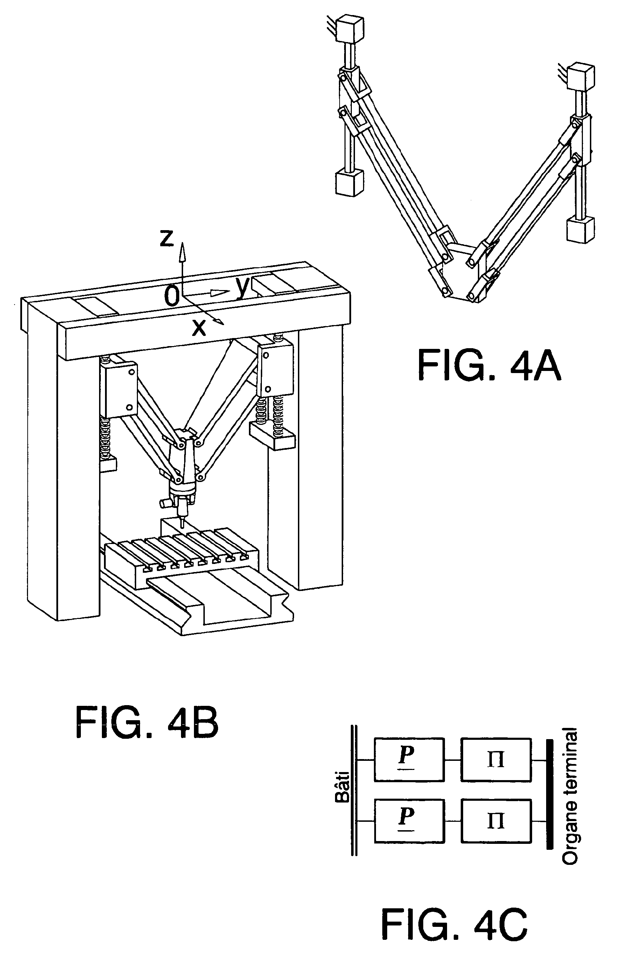

Finally the over-constrained mechanism proposed by Liu [Liu X. J., Kim J., "Two novel parallel mechanisms with less than six degrees of freedom and the applications", in Proceedings of the WORKSHOP on Fundamental Issues and Future Research Directions for Parallel Mechanisms and Manipulators, Quebec City, Quebec, Canada, October, pages 172-177, 2002], uses Π linkages that join the platform with two prismatic actuators situated in vertical position, seen in figure 4A and 4B. This configuration was used also to build a hybrid milling machine, figure 4B, with the third axis in the moving table. Its corresponding joint and loop graph representation is depicted in figure 4C.

The main application of this kind of robots is the manipulation of objects which needs short cycle times. However, all the presented mechanisms are built in one plane. For that reason, the rigidity of these mechanisms through the transversal axis is guaranteed by the legs of the robot, which have to be rigid along this axis in order to minimize the vibrations and deflections. It leads to heavy parts that penalize the dynamics of the robot. This important drawback leads to difficulties to reach high accelerations and by consequence to reach short cycle times. Another consequence of this drawback is the vibrations involved by a planar architecture which leads to a lack of precision.

### BRIEF DESCRIPTION OF THE INVENTION

The Accordingly, the present invention provides a two degree-of freedom parallel manipulator as defined in claim 1. two degree-of-freedom parallel manipulator comprises a frame, a first frame arm, a second frame arm, a first platform arm, a second platform arm, a platform and an end-effector. Each platform arm has a first end and a second end. Similarly, each frame arm has a first end and a second end. The connection of said manipulator is that the first end of the first and second frame arms is linked to the frame. The second end of the first frame arm is linked to the first end of the first platform arm. Similarly, the second end of the second frame arm is linked to the first end of the second platform arm. A possible linkage means are spherical joints. The union of a frame arm and a platform arm can be understood as a kinematic chain that is linked to the platform and to the frame on their corresponding ends. The end-effector is linked to the platform. The first frame arm and the second frame arm are actuated independently one from the other. Said frame arms can be actuated, for instance, by motors. Each frame arm may have a motor that may produce a different motion than the motion of the other frame arm.

According to the present invention, the two degree-of-freedom parallel manipulator further comprises a third frame arm and a fourth frame arm, with their corresponding platform arms, that is a third platform arm and a fourth platform arm. The connection of the third frame arm and the fourth frame arm to their corresponding platform arms, the third and fourth platform arm, is equal to that made on the first and second frame arms. The invention adds two additional kinematic chains, equal to the previously described. However, said third and fourth frame arms are linked to the frame with revolute joints. The third frame arm and fourth frame arm are coupled, so that the third frame arm rotation is equal in magnitude and with opposite direction to the fourth frame arm rotation. That means that when the third frame arm rotates 30° clockwise for example, the fourth frame arm rotates 30° anticlockwise. Alternatively, a rotation velocity of 1 rad/s clockwise of the third frame arm corresponds to a rotation velocity of 1 rad/s anticlockwise of the fourth frame arm.

The configuration of said first and second frame arms and said third and fourth frame arms is that the first frame arm and the second frame arm are contained in a first plane and the third frame arm and fourth frame arm are contained in a second plane, the first plane and the second plane being orthogonal.

The coupling of the third and fourth frame arms involves that the first and second platform arms and the platform are contained in the first plane (defined in the previous paragraph).

The existing two degree-of-freedom parallel manipulators are built in one plane. For that reason, the rigidity of these mechanisms through the transversal axis is guaranteed by the legs of the robot, which have to be rigid along this axis in order to minimize the vibrations and deflections and to increase the positioning accuracy. It leads to heavy parts that penalize the dynamics of the robot.

This particular construction of the manipulator limits the degrees of freedom of the manipulator to two. The mechanism of the invention uses additional kinematic chains that guarantee a high rigidity of the architecture through a transversal axis.

The consequence is to propose a robot ten times stiffer than the existing robots, with a structure five times lighter.

This consequence shows that the robot is able to reach higher dynamics, i.e. shorter cycle time, with a lighter mechanism.

In a preferred embodiment the platform can be rigid. The rigidity of the platform implies that the platform cannot be bent and the elements or pieces that constitute the platform cannot vary their relative position.

The present invention proposes different alternatives to carry out the rotation coupling of the third frame arm and the fourth frame arm. Said coupling can be realized with revolute joints that comprise two gears with a radius ratio equal to 1, each gear connected to the third frame arm and to the fourth frame arm. A second option consists on revolute joints that comprise four pulleys with equal diameter and two cross belts fixed on the pulleys, each pulley connected to the third frame arm and to the fourth frame arm. One of this pulleys-belt configuration will be used to fold the third and fourth frame arms and a second pulleys-belt configuration will be used to unfold said third and fourth frame arms. A third option is to use two legs, consisting on a first leg and a second leg, each leg with a first end and a second end. Said first leg linked to the third frame arm by a revolute joint on the first end and to the frame by a prismatic joint on the second end, and said second leg linked to the fourth frame arm by a revolute joint on the first end and to the frame by a prismatic joint on the second end. Both first leg and second leg have the same length and share on their second end the same prismatic joint, that is, both second ends are coupled together and linked on said prismatic joint.

### BRIEF DESCRIPTION OF THE DRAWINGS

To complement the description being made and for the purpose of aiding to better understand the description and the features of the invention according to a preferred practical embodiment thereof, a set of drawings is attached as an integral part of said description, showing the following with an illustrative and nonlimiting character:
Figure 1 shows the representation of a two degree-of-freedom mechanism with constant orientation platform and prismatic drives.
Figure 1A shows the joint and loop graph of the mechanism of figure 1.
Figure 1B shows the joint and loop graph using the Π joint representation of the mechanism of figure 1.
Figure 2 shows a two degree-of-freedom robot with constant orientation platform and rotational drives, its representation and its loop graph using the n joint representation.
Figure 3A shows a representation of mechanism and the mechanical chain of lambda configuration.
Figure 3B shows a joint and loop graph of lambda configuration with prismatic drives.
Figure 4A shows the representation of an over-constrained mechanism with vertical prismatic drives.
Figure 4B shows a particular machine tool application of the mechanism of figure 4A.
Figure 4C shows the joint and loop graph of the mechanism of figure 4A.
Figure 5 shows a perspective view of a two degree-of-freedom parallel manipulator according to the present invention.
Figure 6 shows a first embodiment of the manipulator where the revolute joints that couple the third and fourth frame arms are gears.
Figure 7 shows a second embodiment of the manipulator where on the revolute joints a set of pulleys with crossed belts fixed on said pulleys are fixed.
Figure 8 shows a third embodiment of the manipulator where the coupling between the third and fourth frame arms is performed by two additional legs linked to the frame thanks to a prismatic joint.

### PREFERRED EMBODIMENT OF THE INVENTION

In view of the discussed figures, a possible embodiment of a two degree-of-freedom parallel manipulator according to the invention is disclosed.

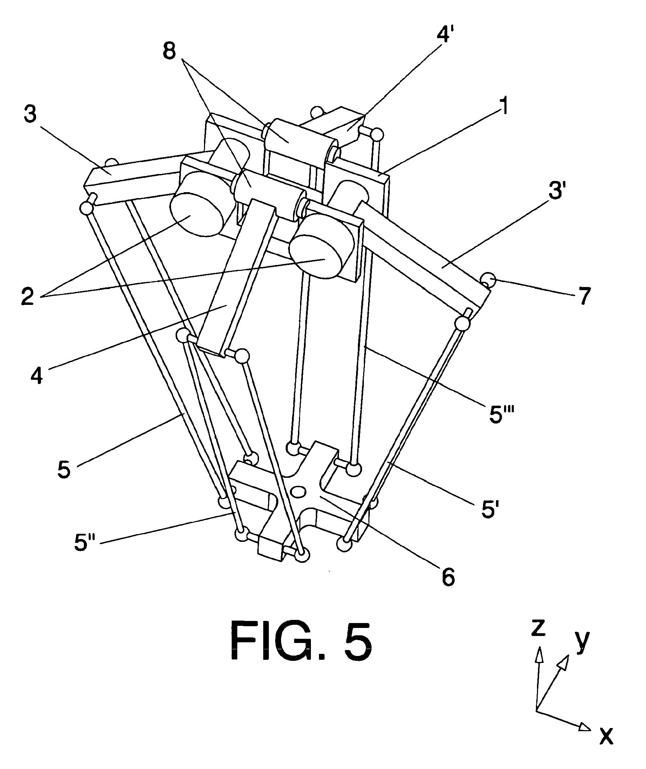

Figure 5 shows a general view of a manipulator according to the present invention. Said manipulator comprises a frame (1), four frame arms (3, 3', 4, 4'), four platform arms (5, 5', 5" , 5"'), a rigid platform (6) and an end-effector. The end-effector may hold the object and the manipulator will perform the "pick & place" tasks.

Both the frame arms and platform arms have a first end and a second end. The four frame arms (3, 3', 4, 4') are linked to the rigid frame by their first ends. Each frame arm is linked to the first end of a platform arm by its second end with spherical joints (7), that is, a spherical joint (7) links the first frame arm (3) and the first platform arm (5), similarly, spherical joints (7) link the second frame arm (3') and the second platform arm (5'), the third frame arm (4) and the third platform arm (5") and the fourth frame arm (4') and the fourth platform arm (5"'),. Finally, the platform arms (5, 5', 5", 5"') by their second ends are linked to the platform (6) and the end-effector is linked to said platform (6). The connection between the platform arms (5, 5', 5", 5"') and the platform (6) can be also carried out with spherical joints (7).

The platform arms (5, 5', 5" , 5"'), in this embodiment, are composed by two legs linked by spherical joints (7). Alternatively, only for those platform arms (5, 5', 5", 5"') that are linked to the first pair of frame arms, said platform arms (5, 5', 5", 5"') could be made with solid arms and linked by revolute joints.

The four frame arms (3, 3', 4, 4') are a first frame arm (3), a second frame arm (3'), a third frame arm (4) and a fourth frame arm (4'). Both the first frame arm (3) and the second frame arm (3') are actuated by a motor (2). Each motor (2) moves a frame arm (3, 3'), therefore the first frame arm (3) and the second frame arm (3') can be moved independently. On the other side, the third frame arm (4) and the fourth frame arm (4') will be coupled on their rotation. Said third frame arm (4) and fourth frame arm (4') are linked to the frame (1) by revolute joints (8). The coupling on the rotation of the third frame arm (4) and the fourth frame arm (4') means that a rotation clockwise of the third frame arm (4) or fourth frame arm (4') corresponds to the same rotation anticlockwise of the fourth frame arm (4') or the third frame arm (4).

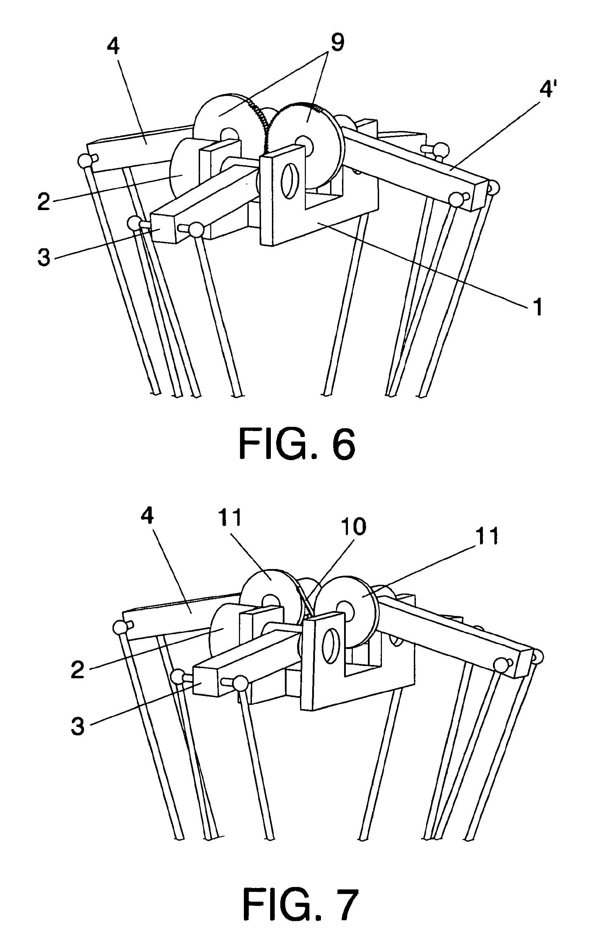

Figure 6 shows a first embodiment of the connection of the rotation of the third frame arm (4) and the fourth frame arm (4'). This embodiment is based on two gears (9) fixed on the revolute joints (8). Said gears (9) have a radius ratio equal to one. Therefore, whenever the third frame arm (4) or the fourth frame arm (4') rotates, the fourth frame arm (4') of the third frame arm (4) rotates, but on the opposite direction. Given that the radius ratio is equal to one, the rotation of the third frame arm (4) and the fourth frame arm (4') is equal in magnitude, although the direction is opposite.

Figure 7 shows a second embodiment of the connection of the rotation of the third frame arm (4) and the fourth frame arm (4'). In this case, the connection is made by means of four pulleys (11) and two crossed belts (10) fixed on the pulleys (11). In this case, the diameters of the two pulleys (11) must be equal, being this constrain equivalent to the gears radius ratio equal to 1. The belt (10) will be fixed on the pulleys (11) in such a way that both pulleys (11) rotate in opposite directions.

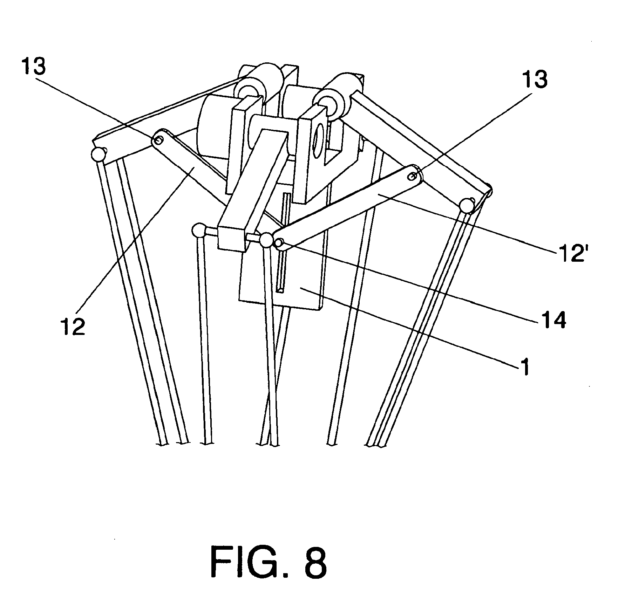

Figure 8 depicts a third alternative for the connection of the rotation of the third frame arm (4) and the fourth frame arm (4'). Such connection is based on linking the rotation of the third frame arm (4) and the fourth frame arm (4') to a linear movement of two different legs (12, 12') linked to said third frame arm (4) and fourth frame arm (4') and to the frame (1). The first linkage is made by a revolute joint (13) and the second one with a prismatic joint (14). In order to couple the rotations, the third frame arm (4) and the fourth frame arm (4') must remain symmetric, that is, the revolute joints (13) must be in the same place according to the plane of symmetry and the prismatic joint (14) must be contained on said plane of symmetry. Additionally, the two second ends of both legs (12, 12') must be connected together on the prismatic joint (14) to perform well.

If the first and second platform arms (5, 5') are constituted by one or two rods, then the joints between the frame arms (3, 3') and the platform arms (5,5'), and the joints between the platform arms (5,5') and the platform (6) can be spherical joints, U-joints or revolute joints.

If the third and fourth platform arms (5" , 5"') are constituted by one rod, then the joints between the frame arms (4, 4') and the platform arms (5", 5"'), and the joints between the platform arms (5", 5"') and the platform (6) are U-joints.

If the third and fourth platform arms (5", 5"') are constituted by two rods, then the joints between the frame arms (4, 4') and the platform arms (5", 5"'), and the joints between the platform arms (5", 5"') and the platform (6) can be spherical joints or U-joints.

In view of this description and set of drawings, a person skilled in the art will understand that the embodiments of the invention that have been described can be combined in many ways within the object of the invention defined in the appended claims. The invention has been described according to several preferred embodiments thereof, but it will be evident for a person skilled in the art that many variations can be introduced in said preferred embodiments without exceeding the scope of the invention defined in the appended claims .

## Claims

1. Two decree-of-freedom parallel manipulator that comprises a frame (1), a first frame arm (3), a second frame arm (3'), each frame arm (3, 3') actuated independently one from the other, each frame arm (3, 3') with a first end and a second end, a first platform arm (5), a second platform arm (5'), each platform arm (5, 5') with a first end and a second end, a platform (6) and an end-effector, the first end of the first frame arm (3) and the first end of the second frame arm (3') being linked to the frame (1) , the second end of the first frame arm (3) being linked to a first end of the first platform arm (5) , the second end of the second frame arm (3') being linked to a first end of the second platform arm (5'), the second end of the first platform arm (5) and the second end of the second platform arm (5') being linked to the platform (6), and the platform (6) being linked to the end-effector,
wherein
the two degree-of-freedom parallel manipulator further comprises a third frame arm (4) and a fourth frame arm (4'), each frame arm (4, 4') with a first end and a second end, and a third platform arm (5") and a fourth platform arm (5"'), each platform arm (5", 5"') with a first end and a second end, the first end of the third frame arm (4) and the first end of the fourth frame arm (4') being linked to the frame (1) with revolute joints (8), the second end of the third frame arm (4) being linked to the first end of the third platform arm (5"),
the second end of the fourth frame arm (4') being linked to the first end of the fourth platform arm (5"), and the second end of the third platform arm (5") and the second end of the fourth platform arm (5"') being linked to the platform (6), the third frame arm (4) and the fourth frame arm (4') being coupled, so that the rotation of the third frame arm (4) is equal in magnitude and with opposite direction to the rotation of the fourth frame arm (4'), said first frame arm (3) and second frame arm (3") being contained in a first plane and said third frame arm (4) and fourth frame arm (4') being contained in a second plane, the first plane and the second plane being orthogonal, the coupling of the third and fourth frame arms involving that the first and second platform arms (5, 5') and the platform (6) are contained in the first plane.

2. Two degree-of-freedom parallel manipulator according to claim 1, **characterised in that** the platform (6) is rigid.

3. Two degree-of-freedom parallel manipulator according to any of claims 1-2, **characterised in that** each revolute joint (8) comprises a gear (9), having the gears (9) of the third frame arm (4) and fourth frame arm (4') a radius ratio equal to 1.

4. Two degree-of-freedom parallel manipulator according to any of claims 1-2, **characterised in that** each revolute joint (8) comprises two pulleys (11), having the pulleys (11) of the third frame arm (4) and fourth frame arm (4') equal diameter and an at least one cross belt (10) fixed on said pulleys (11).

5. Two degree-of-freedom parallel manipulator being according to any of claims 1-2, **characterised in that** said two degree-of-freedom parallel manipulator comprises two legs (12, 12'), consisting on a first leg (12) and a second leg (12'), each leg (12, 12') having a first end and a second end, said first leg (12) being linked to the third frame arm (4) by a revolute joint (13) on the first end and to the frame (1) by a prismatic joint (14) on the second end, and said second leg (12') being linked to the fourth frame arm (4') by a revolute joint (13) on the first end and to the frame (1) by a prismatic joint (14) on the second end, the first leg (12) and second leg (12') being of the same length and the second end of the first leg (12) and the second end of the second leg (12') being linked together on the prismatic joint (14).

6. Two degree-of-freedom parallel manipulator according to any of claims 1-5, **characterised in that** spherical joints (7) link the first frame arm (3) and the first platform arm (5), the second frame arm (3') and the second platform arm (5'), the third frame arm (4) and the third platform arm (5"), and the fourth frame arm (4') and the fourth platform arm (5"').

7. Two degree-of-freedom parallel manipulator according to any of claims 1-6, **characterised in that** spherical joints (7) link the platform arms (5, 5', 5", 5"') and the platform (6).

## Patentansprüche

1. Paralleler Manipulator in zwei Freiheitsgraden mit einem Rahmen (1), mit einem ersten Rahmenarm (3), mit einem zweiten Rahmenarm (3'), wobei jeder Rahmenarm (3, 3') unabhängig von dem anderen betätigt wird, wobei jeder Rahmenarm (3, 3') ein erstes Ende und ein zweites Ende aufweist, mit einem ersten Plattformarm (5), mit einem zweiten Plattformarm (5'), wobei jeder Plattformarm (5, 5') ein erstes Ende und ein zweites Ende aufweist, mit einer Plattform (6) und mit einem Endeffektor, wobei das erste Ende des ersten Rahmenarms (3) und das erste Ende des zweiten Rahmenarms (3') mit dem Rahmen (1) verbunden sind, wobei das zweite Ende des ersten Rahmenarms (3) mit einem ersten Ende des ersten Plattformarms (5) verbunden ist, wobei das zweite Ende des zweiten Rahmenarms (3') mit einem ersten Ende des zweiten Plattformarms (5') verbunden ist, wobei das zweite Ende des ersten Plattformarms (5) und das zweite Ende des zweiten Plattformarms (5') mit der Plattform (6) verbunden sind, und wobei die Plattform (6) mit dem Endeffektor verbunden ist,
wobei
der parallele Manipulator in zwei Freiheitsgraden ferner einen dritten Rahmenarm (4) und einen vierten Rahmenarms (4') aufweist, wobei jeder Rahmenarm (4, 4') ein erstes Ende und ein zweites Ende aufweist, und einen dritten Plattformarm (5") und einen vierten Plattformarm (5"') aufweist, wobei jeder Plattformarm (5", 5"') ein erstes Ende und ein zweites Ende aufweist, wobei das erste Ende des dritten Rahmenarms (4) und das erste Ende des vierten Rahmenarms (4') mit dem Rahmen (1) über Drehgelenke (8) verbunden sind, wobei das zweite Ende des dritten Rahmenarms (4) mit dem ersten Ende des dritten Plattformarms (5") verbunden ist, wobei das zweite Ende des vierten Rahmenarms (4') mit dem ersten Ende des vierten Plattformarms (5") verbunden ist, und wobei das zweite Ende des dritten Plattformarms (5") und das zweite Ende des vierten Plattformarms (5"') mit der Plattform (6) verbunden sind, wobei der dritte Rahmenarm (4) und der vierte Rahmenarm (4') so gekoppelt sind, dass die Drehung des dritten Rahmenarms (4) von gleichem Betrag und mit entgegengesetzter Richtung zu der Drehung des vierten Rahmenarms (4') ist, wobei der erste Rahmenarm (3) und der zweite Rahmenarm (3') in einer ersten Ebene enthalten sind und der dritte Rahmenarm (4) und der vierte Rahmenarm (4') in einer zweiten Ebene enthalten sind, wobei die erste Ebene und die zweite Ebene senkrecht zueinander sind, wobei die Kopplung des dritten und des vierten Rahmenarms notwendig macht, dass die ersten und zweiten Plattformarme (5, 5') und die Plattform (6) in der ersten Ebene enthalten sind.

2. Paralleler Manipulator in zwei Freiheitsgraden nach Anspruch 1, **dadurch gekennzeichnet, dass** die Plattform (6) starr ist.

3. Paralleler Manipulator in zwei Freiheitsgraden nach einem der Ansprüche 1 bis 2, **dadurch gekennzeichnet, dass** jedes Drehgelenk (8) ein Zahnrad (9) aufweist, wobei die Zahnräder (9) des dritten Rahmenarms (4) und des vierten Rahmenarms (4') ein Radiusverhältnis von 1 aufweisen.

4. Paralleler Manipulator in zwei Freiheitsgraden nach einem der Ansprüche 1 bis 2, **dadurch gekennzeichnet, dass** jedes Drehgelenk (8) zwei Scheiben (11) aufweist, wobei die Scheiben (11) des dritten Rahmenarms (4) und des vierten Rahmenarms (4') den gleichen Durchmesser aufweisen und wobei wenigstens ein Querband (10) auf den Scheiben (11) fest vorgesehen ist.

5. Paralleler Manipulator in zwei Freiheitsgraden nach einem der Ansprüche 1 bis 2, **dadurch gekennzeichnet, dass** der parallele Manipulator in zwei Freiheitsgraden zwei Beine (12, 12') aufweist, die aus einem ersten Bein (12) und einem zweiten Bein (12') bestehen, wobei jedes Bein (12, 12') ein erstes Ende und ein zweites Ende aufweist, wobei das erste Bein (12) mit dem dritten Rahmenarm (4) über ein Drehgelenk (13) an dem ersten Ende und mit dem Rahmen (1) über ein Schubgelenk (14) an dem zweiten Ende verbunden ist, und wobei das zweite Bein (12') mit dem vierten Rahmenarm (4') über ein Drehgelenk (13) am ersten Ende und mit dem Rahmen (1) über ein Schubgelenk (14) am zweiten Ende verbunden ist, wobei das erste Bein (12) und das zweite Bein (12') von der gleichen Länge sind und das zweite Ende des ersten Beins (12) und das zweite Ende des zweiten Beins (12') an dem Schubgelenk (14) miteinander verbunden sind.

6. Paralleler Manipulator in zwei Freiheitsgraden nach einem der Ansprüche 1 bis 5, **dadurch gekennzeichnet, dass** Kugelgelenke (7) den ersten Rahmenarm (3) und den ersten Plattformarm (5), den zweiten Rahmenarm (3') und den zweiten Plattformarm (5'), den dritten Rahmenarm (4) und den dritten Plattformarm (5") und den vierten Rahmenarm (4') und den vierten Plattformarm (5"') verbinden.

7. Paralleler Manipulator in zwei Freiheitsgraden nach einem der Ansprüche 1 bis 6, **dadurch gekennzeichnet, dass** Kugelgelenke (7) die Plattformarme (5, 5' , 5" , 5"') und die Plattform (6) verbinden.

## Revendications

1. Manipulateur parallèle à deux degrés de liberté, comprenant un cadre (1), un premier bras de cadre (3), un deuxième bras de cadre (3'), chaque bras de cadre (3, 3') étant actionné indépendamment l'un de l'autre, chaque bras de cadre (3, 3') ayant une première et une deuxième extrémité, un premier bras de plateforme (5), un deuxième bras de plateforme (5'), chaque bras de plateforme (5, 5') ayant une première et une deuxième extrémité, une plateforme (6) et un actionneur final, la première extrémité du premier bras de cadre (3) et la première extrémité du deuxième bras de cadre (3') étant reliées au cadre (1), la deuxième extrémité du premier bras de cadre (3) étant reliée à une extrémité du premier bras de plateforme (5), la deuxième extrémité du deuxième bras de cadre (3') étant reliée à une première extrémité du deuxième bras de plateforme (5'), la deuxième extrémité du premier bras de plateforme (5) et la deuxième extrémité du deuxième bras de plateforme (5') étant reliées à la plateforme (6), et la plateforme (6) étant reliée à l'actionneur final,
dans lequel
le manipulateur parallèle à deux degrés de liberté comprend en outre un troisième bras de cadre (4) et un quatrième bras de cadre (4'), chaque bras de cadre (4, 4') ayant une première et une deuxième extrémité, et un troisième bras de plateforme (5") et un quatrième bras de plateforme (5"'), chaque bras de plateforme (5", 5"') ayant une première et une deuxième extrémité, la première extrémité du troisième bras de cadre (4) et la première extrémité du quatrième bras de cadre (4') étant reliées au cadre (1) avec des articulations de rotation (8), la deuxième extrémité du troisième bras de cadre (4) étant reliée à la première extrémité du troisième bras de plateforme (5"), la deuxième extrémité du quatrième bras de cadre (4') étant reliée à la première extrémité du quatrième bras de plateforme (5"), et la deuxième extrémité du troisième bras de plateforme (5") et la deuxième extrémité du quatrième bras de plateforme (5"') étant reliées à la plateforme (6), le troisième bras de cadre (4) et le quatrième bras de cadre (4') étant couplés de manière que la rotation du troisième bras de cadre (4) soit égale en amplitude, et avec un sens opposé, à la rotation du quatrième bras de cadre (4'), ledit premier bras de cadre (3) et ledit deuxième bras de cadre (3') étant contenus dans un premier plan, et lesdits troisième bras de cadre (4) et quatrième bras de cadre (4') étant contenus dans un deuxième plan, le premier plan et le deuxième plan étant perpendiculaires, le couplage des troisième et quatrième bras de cadre impliquant que les premier et deuxième bras de plateforme (5, 5') et la plateforme (6) soient contenus dans le premier plan.

2. Manipulateur parallèle à deux degrés de liberté selon la revendication 1, **caractérisé en ce que** la plateforme (6) est rigide.

3. Manipulateur parallèle à deux degrés de liberté selon l'une quelconque des revendications 1 à 2, **caractérisé en ce que** chaque articulation de rotation (8) comprend une roue dentée (9), les roues dentées (9) du troisième bras de cadre (4) et du quatrième bras de cadre (4') étant dans un rapport entre les rayons égal à 1.

4. Manipulateur parallèle à deux degrés de liberté selon l'une quelconque des revendications 1 à 2, **caractérisé en ce que** chaque articulation de rotation (8) comprend deux poulies (11), les poulies (11) du troisième bras de cadre (4) et du quatrième bras de cadre (4') étant de diamètre identique et au moins une courroie de liaison (10) étant fixée sur lesdites poulies (11).

5. Manipulateur parallèle à deux degrés de liberté selon l'une quelconque des revendications 1 à 2, **caractérisé en ce que** ledit manipulateur parallèle à deux degrés de liberté comprend deux pieds (12, 12'), composés d'un premier pied (12) et d'un deuxième pied (12'), chaque pied (12, 12') ayant une première extrémité et une deuxième extrémité, ledit premier pied (12) étant relié au troisième bras de cadre (4) par une articulation de rotation (13) sur la première extrémité, et au cadre (1) par une articulation prismatique (14) sur la deuxième extrémité, et ledit deuxième pied (12') étant relié au quatrième bras de cadre (4') par une articulation de rotation (13) sur la première extrémité et au cadre (1) par une articulation prismatique (14) sur la deuxième extrémité, le premier pied (12) et le deuxième pied (12') étant de longueur identique et la deuxième extrémité du premier pied (12) et la deuxième extrémité du deuxième pied (12') étant reliées ensemble sur l'articulation prismatique (14).

6. Manipulateur parallèle à deux degrés de liberté selon l'une quelconque des revendications 1 à 5, **caractérisé en ce que** des articulations sphériques (7) relient le premier bras de cadre (3) et le premier bras de plateforme (5), le deuxième bras de cadre (3') et le deuxième bras de plateforme (5'), le troisième bras de cadre (4) et le troisième bras de plateforme (5"), et le quatrième bras de cadre (4') et le quatrième bras de plateforme (5"').

7. Manipulateur parallèle à deux degrés de liberté selon l'une quelconque des revendications 1 à 6, **caractérisé en ce que** des articulations sphériques (7) relient les bras de plateforme (5, 5', 5", 5"') et la plateforme (6).
